# EUROPÄISCHE PATENTSCHRIFT

(11) **EP 1 813 920 B1**
(45) Veröffentlichungstag und Bekanntmachung des Hinweises auf die Patenterteilung: **09.12.2009**
(21) Anmeldenummer: 06100970.0
(22) Anmeldetag: 27.01.2006
(51) Int. Cl.: G01G 21/28, G01G 23/00

(54) **Verfahren und Vorrichtung zum Betrieb einer Waage**
Weighing scales operating method and device
Procédé et dispositif destinés au fonctionnement d'une balance

(43) Veröffentlichungstag der Anmeldung: 01.08.2007
(73) Patentinhaber: Mettler-Toledo AG, 8606 Greifensee (CH)
(72) Erfinder: Reichmuth, Arthur, 8620, Wetzikon (CH); Nufer, Bruno, 8308, Illnau (CH)

(56) Entgegenhaltungen:
- EP-A- 1 106 978
- DE-C- 705 715
- GB-A- 835 991
- US-A- 5 107 945
- US-A1- 2003 141 572

## Beschreibung

Die Erfindung betrifft ein Verfahren zum Betrieb einer Waage sowie eine Waage zur Durchführung des Verfahrens.

Beim präzisen Verwiegen von Wägegütern ist es ein Erfordernis, möglichst sämtliche Einflussfaktoren auf die Genauigkeit des Wägeresultats zu minimieren. Beispielhaft seien hier Luftbewegungen genannt, welche meist vermittels eines Windschutzes auf ein vernachlässigbares Mass reduziert werden können, oder Schwankungen der Umgebungsbedingungen, wie Temperatur oder Feuchtigkeit, die beispielsweise durch das Platzieren einer Waage in einem klimatisierten Raum beseitigt werden können.

Ein weiterer, das Wägeergebnis beeinflussender Faktor umfasst das Vorhandensein elektrostatischer Ladungen im Wägeraum beziehungsweise in der Umgebung oder direkt auf der zu wiegenden Last, die insbesondere beim Verwiegen von nicht leitfähigen Proben oder beim Verwiegen von Proben, die sich in Gefässen aus nicht-leitfähigem Material befinden, zum Tragen kommen. Besonders problematisch ist die Wirkung elektrostatischer Aufladungen bei Verwendung grosser Glas- oder Polymergefässe im Falle der Bestimmung kleiner Massendifferenzen als Wägeaufgabe. Eine elektrostatische Aufladung der Waagschale selbst, auf welcher die betreffenden Proben und/oder Gefässe, also die Last, platziert sind, findet meist nicht statt, da diese in der Regel aus Metall gefertigt ist und die Ladungen über eine leitfähige Verbindung mit dem Waagengehäuse abfliessen können.

Eine elektrostatische Aufladung einer auf der Waagschale befindlichen Last bewirkt eine Potentialdifferenz zwischen der Last und den geerdeten Waagenteilen. Aufgrund dieser Potentialdifferenz wirkt eine Kraft zwischen der Last und beispielsweise dem Wägeraumboden. Damit wirkt die Vertikalkomponente dieser Kraft auch auf die Wägezelle und addiert sich zu der durch die Last erzeugten Kraft. Demzufolge wird ein falsches Wägeresultat erzeugt und angezeigt, was insbesondere bei hochauflösenden Waagen unerwünscht ist.

Weitere Waagenteile, wie beispielsweise ein vorhandener Windschutz oder andere Bereiche des Gehäuses können, sofern sie aus nicht-leitfähigem Material bestehen, sich ebenfalls elektrostatisch aufladen und durch einen so genannten Kraftnebenschluss verfälschend auf das Wägeresultat wirken.

Eine Analysenwaage zur Wägung von elektrostatisch aufgeladenem Wägegut beschreibt die EP 1 106 978 A1. Die mit einem Windschutz versehene Waage weist eine Vorrichtung zur Erzeugung eines ionisierten Luftstroms auf. Diese Vorrichtung umfasst eine lonisationsvorrichtung mit mindestens zwei Spitzenelektroden, die Spannungen verschiedenen Vorzeichens gegenüber der jeweiligen Gegenelektrode aufweisen, sowie einen Ventilator. Die Vorrichtung kann beim Schliessen der Windschutzöffnungen aktiviert werden und nach einer vorgegebenen Laufzeit ausgeschaltet werden.

Nachteilig bei der beschriebenen Vorrichtung ist, dass einerseits der Ventilator unerwünschte Luftströmungen im Bereich der Waagschale erzeugen kann und andererseits, dass stets ein fest vorgegebenes Mass an Ionisationsladungen zur Neutralisierung der Aufladungen zur Verfügung steht, unabhängig vom Aufladungsgrad der Last auf der Waagschale.

Es ist daher Aufgabe der vorliegenden Erfindung, ein Verfahren und eine Vorrichtung anzugeben, die es erlauben, den Betrieb einer Waage, insbesondere im Falle des Vorhandenseins elektrostatischer Aufladungen, nach den Bedürfnissen des Benutzers zu gestalten.

Diese Aufgabe wird mit den Merkmalen des unabhängigen Verfahrensanspruchs und des unabhängigen Vorrichtungsanspruchs gelöst.

Eine Waage mit einer Waagschale zur Aufnahme einer zu wiegenden Last, und mit einer Wägeelektronik, die eine Messeinheit aufweist, ist mit einem Elektrostatiksensor versehen, welcher derart angeordnet ist, dass elektrostatische Aufladungen an einer auf der Waagschale aufgebrachten oder aufzubringenden Last detektierbar sind. Ein Verfahren zum Betrieb der Waage weist die folgenden Verfahrensschritte auf:
- Ermitteln des Vorhandenseins elektrostatischer Aufladungen vermittels des Elektrostatiksensors,
- Zuleiten der Information bezüglich des das Mass der Aufladungen kennzeichnenden Werts an die Messeinheit,
- Vergleich des das Mass der ermittelten Aufladungen kennzeichnenden Werts mit mindestens einem vordefinierbaren Schwellwert und
- Auslösen einer Aktion der Wägeelektronik.

Das Verfahren bietet einem Benutzer der Waage den Vorteil, dass es über das Vorhandensein elektrostatischer Ladungen als einen das Wägeergebnis beeinflussenden Faktor Auskunft geben kann und somit dadurch verhindert werden kann, dass eine ein falsches Wägeergebnis hervorrufende Wägung ausgeführt wird. Dies insbesondere dann, wenn das Mass der elektrostatischen Aufladungen einen vordefinierbaren Schwellwert übersteigt. Es wird einem Benutzer der Waage eine Möglichkeit an die Hand gegeben, das Problem elektrostatischer Aufladungen zu beseitigen, um zu einem korrekten Wägeergebnis zu gelangen.

Es ist nutzbringend, den Schwellwert nicht als konstant vorauszusetzen, sondern je nach Wägeaufgabe durch geeignete Massnahmen, sei dies durch den Einsatz spezieller elektronischer Bauelemente oder vermittels eines Programms, welches auf mindestens einen vordefinierbaren in einer Speichereinheit abgelegten Schwellwert zurückgreift, den Schwellwert veränderbar zu gestalten. Letzteres erfordert das Vorhandensein einer Prozessoreinheit und eine Speichereinheit in der Messeinheit.

Bevorzugt wird dann in der Prozessoreinheit ein Programm ausgeführt, welches das Mass der ermittelten Aufladungen mit mindestens einem in der Speichereinheit abgelegten veränderbar vordefinierten Schwellwert vergleicht. In einem solchen Fall kann ferner der ermittelte Wert zur weiteren Verarbeitung in der Speichereinheit abgelegt werden.

Insbesondere kann vermittels des Elektrostatiksensors bei Vorhandensein elektrostatischer Aufladungen deren Höhe und/oder deren Vorzeichen gemessen werden und die Information bezüglich des die Höhe und/oder das Vorzeichen der Aufladungen kennzeichnenden Messwerts der Messeinheit zugeleitet werden. Das Programm vergleicht den Messwert mit mindestens einem in der Speichereinheit veränderbar vordefinierten Schwellwert, löst bei Überschreiten mindestens eines Schwellwerts eine Aktion der Wägeelektronik aus und legt den Messwert zur weiteren Verarbeitung in der Speichereinheit ab.

Somit kann eine qualitative, eine semiquantitative oder eine quantitative Analyse möglicher elektrostatischer Aufladungen der Last und gegebenenfalls gewisser Waagenteile beim Wägen durchgeführt werden. Eine qualitative Auswertung umfasst das Ermitteln des Vorhandenseins elektrostatischer Aufladungen oberhalb eines vordefinierbaren Schwellwerts. Eine semiquantitative Analyse erfordert das Bereitstellen von mindestens zwei vordefinierbaren Schwellwerten, wobei eine Auswertung der ermittelten Aufladung nacheinander den das Mass der Aufladung kennzeichnenden Wert mit den verschiedenen Schwellwerten vergleicht und dann kategorisiert, beispielsweise in keine Aufladung, niedrige Aufladung, mittlere Aufladung, hohe Aufladung. Anschliessend wird das Programm eine der zugeordneten Kategorie angemessene Aktion der Wägeelektronik auslösen. Bei einer quantitativen Analyse wird die elektrostatische Aufladung gemessen und ein der Höhe und/oder dem Vorzeichen zuordenbarer Messwert wird entsprechend einem Programmteil des im Prozessor ausführbaren Programms derart verarbeitet, dass eine dem Messwert angemessene Aktion der Wägeelektronik erfolgen kann.

In bevorzugter Ausformung ist in der Wägeelektronik ein Zeitgeber vorhanden, wobei die Prozessoreinheit auf diesen zugreifen kann und das Programm jedem das Mass, insbesondere die Höhe und/oder das Vorzeichen, der Aufladung kennzeichnenden Wert, insbesondere dem Messwert, einen Zeitwert zuordnet und das Wertepaar in der Speichereinheit ablegt.

Die Waage weist eine Ausgabeeinheit, insbesondere eine Anzeige- und Bedieneinheit und/oder mindestens eine Leuchtdiode, gegebenenfalls einen Drucker, auf, wobei ein vom das Mass, beziehungsweise die Höhe und/oder das Vorzeichen der Aufladung kennzeichnenden Wert und/oder Messwert, abhängiges Signal an der Ausgabeeinheit ausgegeben wird und somit dem Benutzer der Waage zur Kenntnis gebracht wird. Insbesondere kann dieser aufgefordert werden eine Aktion der Wägeelektronik auszulösen. Häufig ist es jedoch von Vorteil, dass durch das Programm aufgrund des Messwerts die Aktion der Wägeelektronik gesteuert wird und diese Aktion selbsttätig erfolgt.

In einer vorteilhaften Weiterbildung weist die Waage eine Ionisationsvorrichtung auf, wobei bei Überschreiten eines vordefinierten Schwellwerts durch den das Mass insbesondere die Höhe und/oder das Vorzeichen, der Aufladung kennzeichnenden Wert, insbesondere den Messwert, die Ionisationsvorrichtung in Gang gesetzt wird.

Auch ist es denkbar und wünschenswert, die Daten zur Dauer und Intensität der Aktivität der Ionisationsvorrichtung in der Speichereinheit abzulegen, wobei sie jederzeit über eine Ausgabeeinheit der Waage abrufbar sind.

Die Aktivität der Ionisationsvorrichtung, insbesondere die Dauer und/oder die Intensität der Ionisation, kann dabei entsprechend der Grösse des die Aufladung kennzeichnenden Werts, insbesondere des Messwerts, erfolgen.

In einer Weiterbildung des Verfahrens wird nach erfolgter Ionisation das Mass, insbesondere die Höhe und/oder das Vorzeichen, der Aufladung erneut ermittelt und der Wert, insbesondere der Messwert, der Messeinheit zugeführt, wonach die Dauer und/oder die Intensität der Ionisation an den neuen Wert angepasst wird und die Folge von Ermitteln des Masses der Aufladung und nachfolgender Ionisation solange wiederholt wird, bis der das Mass der Aufladung kennzeichnende Wert unter einen vordefinierten Schwellwert abgesunken ist.

Es kann auch ein Feuchtigkeitssensor zur Bestimmung der Luftfeuchtigkeit vorhanden sein und die Information bezüglich des das Mass der Luftfeuchtigkeit kennzeichnenden Werts der Messeinheit zugeleitet werden, wobei das Programm die Aktivität der Ionisationsvorrichtung entsprechend dem Mass der Luftfeuchtigkeit modifiziert.

In einer speziellen Ausführung der Waage, wobei diese einen die Waagschale umgebenden Wägeraum, der von einer Windschutzvorrichtung umschlossen ist, aufweist, und wobei die Windschutzvorrichtung mindestens eine durch eine Wand verschliessbare Öffnung für den Zugang zum Wägeraum aufweist, besteht ein weiterer vorteilhafter Verfahrenschritt darin, dass der Elektrostatiksensor bei Betätigen der Wand elektrostatische Aufladungen der Last bereits beim Einbringen derselben in den Wägeraum ermittelt.

Für den Fall, dass ein Codeleser vorhanden ist und dass das das Wägegut beinhaltende Gefäss einen Code aufweist, welcher über das Material des Gefässes Auskunft gibt, kann im Programm ein Programmteil ausgeführt werden, welcher die Aktivität der Ionisationsvorrichtung entsprechend dem Gefässmaterial modifiziert.

Eine Waage zur Durchführung des oben beschriebenen Verfahrens besitzt eine Waagschale sowie eine Wägeelektronik, wobei Letztere eine Messeinheit aufweist. Es ist ein Elektrostatiksensor vorhanden, welcher derart angeordnet ist, dass elektrostatische Aufladungen einer auf der Waagschale aufgebrachten oder aufzubringenden Last ermittelbar sind. Der Elektrostatiksensor steht mit der Messeinheit in Verbindung, wobei bei festgestellter, über mindestens einen vordefinierbaren Schwellwert hinausreichender Aufladung eine Aktion der Wägeelektronik auslösbar ist.

Eine solche Waage gewährleistet einem Benutzer mehr Sicherheit. Dieser muss insbesondere nicht stets eine durch mögliche elektrostatische Aufladungen der Last hervorgerufene Verfälschung des Wägeergebnisses vor Augen haben, da die ausgelösten Massnahmen zur Beseitigung dieser Problematik beitragen.

Bevorzugt ist die Messeinheit der Waage mit einem Prozessor sowie einer Speichereinheit versehen, wobei im Prozessor der Messeinheit ein Programm ausführbar ist, das bei festgestellter, über mindestens einen vordefinierbaren Schwellwert hinausreichender Aufladung eine Aktion der Wägeelektronik auslöst und/oder den gemessenen Wert zur weiteren Verarbeitung in der Speichereinheit ablegt.

In besonderer Ausführung der Waage ist eine Ionisationsvorrichtung vorhanden, die im Falle vorhandener elektrostatischer Aufladungen aktivierbar ist und/oder von der Messeinheit entsprechend der ermittelten Aufladung der Last steuerbar ist.

In einer bevorzugen Ausgestaltung der Waage weist diese einen die Waagschale umgebenden Wägeraum auf, der von einer Windschutzvorrichtung umschlossen ist. Die Windschutzvorrichtung umfasst mindestens eine Wand, welche eine Öffnung für den Zugang zum Wägeraum verschliessen kann, wobei mindestens ein Sensorelement des mindestens einen Elektrostatiksensors in unmittelbarer Nähe der verschliessbaren Öffnung angeordnet ist. Vorteilhafterweise können die mindestens eine Ionenquelle der Ionisationsvorrichtung und/oder mindestens ein Sensorelement des mindestens einen Elektrostatiksensors in unmittelbarer Nähe der mindestens einen Öffnung der Windschutzvorrichtung angeordnet sein.

In bevorzugter Ausfertigung weist die Windschutzvorrichtung der Waage mindestens eine feststehende Wand auf, welche mit Aussparungen versehen ist. In diesen Aussparungen sind die mindestens eine Ionenquelle der Ionisationsvorrichtung und/oder mindestens ein Sensorelement des mindestens einen Elektrostatiksensors angeordnet.

Insbesondere weist die Waage ein der Unterbringung einer Wägezelle und der Wägeelektronik dienendes Waagengehäuse auf, dessen eine Wand eine feststehende Wand der Windschutzvorrichtung bildet, wobei am Waagengehäuse in die Aussparungen mündende Führungsschächte angeordnet sind, in welchen Zuleitungen zum Sensorelement des Elektrostatiksensors und/oder Zuleitungen zur Ionenquelle der Ionisationsvorrichtung angeordnet sind. Alternativ können die Führungsschächte umfangreicher ausgeformt sein und es können elektronische Bauelemente des Elektrostatiksensors und/oder der Ionisationsvorrichtung darin untergebracht sein.

In bevorzugter Weiterbildung der Waage ist eine Ausgabeeinheit, insbesondere mindestens eine Leuchtdiode und/oder eine Anzeigeeinheit und/oder ein Drucker vorhanden zur semiquantitativen Anzeige einer elektrostatischen Aufladung und/oder zur Ausgabe eines die Höhe und/oder das Vorzeichen der Aufladung kennzeichnenden Messwerts.

Die erfindungsgemässe Waage sowie das Verfahren zur Bestimmung des Vorhandenseins elektrostatischer Ladungen im Wägeraum einer Waage werden anhand der stark schematisierten Zeichnungen im Folgenden dargestellt und beschrieben. Es zeigen:
- Figur 1: eine Waage mit einer Windschutzvorrichtung in dreidimensionaler Darstellung, mit einem Sensorelement eines Elektrostatiksensors und mit zwei Ionenquellen einer Ionisationsvorrichtung;
- Figur 2: eine Waage mit einer Windschutzvorrichtung in dreidimensionaler Darstellung, mit zwei Sensorelementen mindestens eines Elektrostatiksensors und mit zwei Ionenquellen einer Ionisationsvorrichtung;
- Figur 3: eine Variante der Anordnung der gemäss Figur 2 gezeigten Sensorelemente und der Ionenquellen in einer Ausschnittvergrösserung;
- Figur 4: eine weitere Variante der Anordnung der gemäss Figur 2 gezeigten Sensorelemente und der Ionenquellen in einer Ausschnittvergrösserung;
- Figur 5: ein Beispiel eines Elektrostatiksensors als Schaltschema;
- Figur 6: eine Waage mit einem Elektrostatiksensor und mit einer Ionisationsvorrichtung als Blockdiagramm dargestellt;
- Figur 7: ein Flussdiagramm, zur Darstellung des Zusammenwirkens von Elektrostatiksensor und Ionisationsvorrichtung

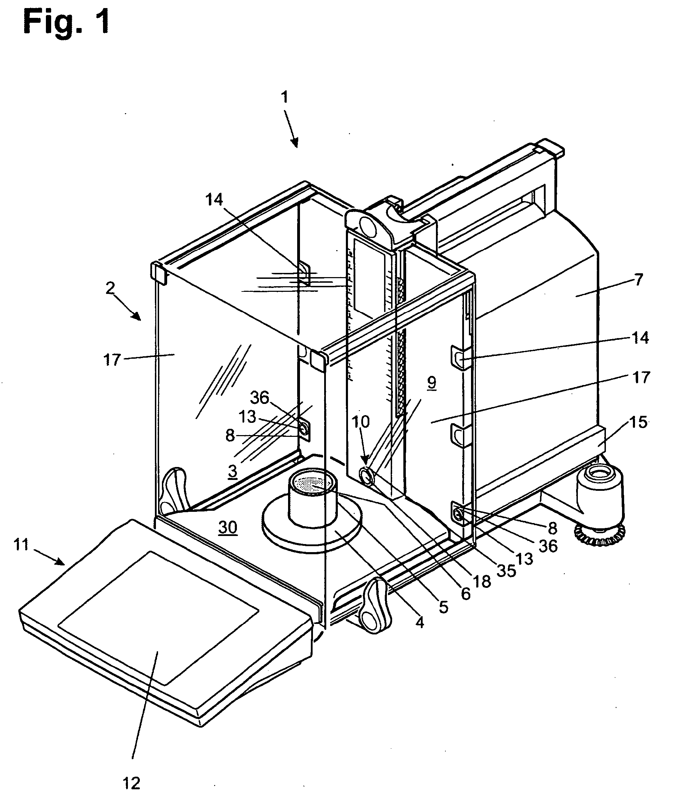

In der Figur 1 ist in dreidimensionaler Darstellung eine Waage 1 gezeigt. Diese Waage 1 weist eine Windschutzvorrichtung 2 auf, welche einen Wägeraum 3 umschliesst, wobei sich eine Waagschale 4 im Wägeraum 3 befindet. Die Waagschale 4 ist in bekannter Weise mit einer sich im Gehäuse 7 der Waage 1 befindlichen und daher hier nicht sichtbaren Wägezelle mittels eines durch den Wägeraumboden 30 hindurch reichenden Gestänges (hier ebenfalls nicht sichtbar) verbunden. Auf der Waagschale 3 befindet sich ein Behältnis 5 mit Wägegut 6. Das Behältnis 5 ist aus Polymermaterial, beispielsweise Polyethylen oder Polypropylen gefertigt, das Wägegut 6 kann zum Beispiel ein Pulver sein, welches in einem Labor vor seiner Verwendung abgewogen werden muss. Aufgrund der elektrisch isolierenden Eigenschaften sowohl des Behältnisses 5 als auch des Wägeguts 6 können beide sich elektrostatisch aufladen und üben dann zusätzlich zu der durch ihre Masse wirkenden Kraft auch noch eine elektrostatische Kraft auf die Waagschale 4 aus. Dadurch wird das Wägeergebnis verfälscht.

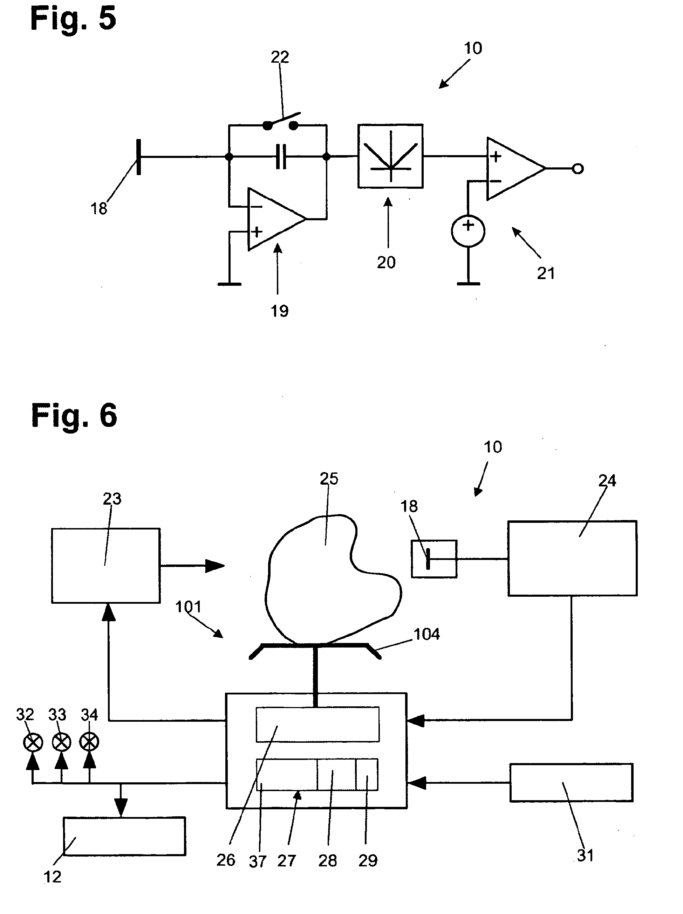

Um nun das Mass und/oder die Höhe der Aufladung des auf der Waagschale 3 befindlichen Behältnisses 5 samt Wägegut 6 zu bestimmen, ist nahe der Waagschale 4 an der Rückwand 9 ein Elektrostatiksensor 10 angebracht. Von dem Elektrostatiksensor 10 ist im Wesentlichen das Sensorelement 18 in einer Einfassung 35 in der Figur 1 zu sehen. Dieser Elektrostatiksensor 10, welcher weiter unten anhand der Figur 5 näher beschrieben wird, detektiert elektrostatische Aufladungen im Wägeraum 3, welche sich im gezeigten Beispiel bevorzugt an der auf der Waagschale 4 befindlichen Last bestehend aus Behältnis 5 und Wägegut 6 akkumulieren. Das der elektrostatischen Aufladung entsprechende Signal wird vom Sensor 10 an die im Waagengehäuse 7 untergebrachte und daher in der Figur 1 ebenfalls nicht sichtbare Wägeelektronik weitergeleitet, welche im Prozessor einer Messeinheit dieses in Abhängigkeit des Abstands zwischen Last 5, 6 und Elektrostatiksensor 10 verarbeitet und entsprechende Massnahmen in Gang setzt.

Die Waage 1 verfügt über eine Anzeige- und Bedieneinheit 11, die in der Darstellung gemäss Figur 1 einen Bildschirm 12, vorzugsweise einen Touch-Screen Bildschirm, aufweist. Auf diesem kann eine Anzeige des Masses der Aufladung, welche vom Elektrostatiksensor 10 ermittelt wurde, erfolgen.

Das Vorhandensein elektrostatischer Ladungen im Wägeraum 3 kann nun entweder qualitativ mittels eines Symbols am Bildschirm 12 dargestellt werden. Es kann jedoch auch semiquantitativ das Mass der Aufladung z.B. der auf der Waagschale 3 befindlichen Last angezeigt werden, beispielsweise indem mittels Farbdarstellung am Bildschirm das Vorhandensein einer geringen Aufladung durch die Farbe weiss und das Vorhandensein einer hohen Aufladung durch die Farbe rot symbolisiert wird, wobei mindestens ein Zwischenwert durch die Farbe gelb oder orange gekennzeichnet sein könnte. Eine quantitative Angabe der gemessenen Höhe der Aufladung am Bildschirm 12 ist selbstverständlich auch denkbar. Allerdings ist in diesem Falle mit Vorteil der Abstand zwischen Elektrostatiksensor 10 und Behältnis 5 eine zusätzliche Grösse, die bestimmt werden muss und in die Berechnung der Höhe der Aufladung eingeht. Das Vorzeichen der Ladungen kann ebenfalls vom Elektrostatiksensor 10 erfasst und dargestellt werden.

Mit dem Bezugszeichen 13 sind ebenfalls in einer Aussparung 8 in der Rückwand 9 der Waage 1 rechts und links je eine Ionenquelle einer Ionisationsvorrichtung angeordnet. Die Ionenquelle 13 befindet sich ebenfalls in einer Einfassung 36. Diese Ionisationsvorrichtung wird bei nachgewiesener elektrostatischer Aufladung vor dem Wägevorgang in Gang gesetzt, das heisst aktiviert, so dass dieser dann ohne verfälschenden Kraftnebenschluss aufgrund von elektrostatischen Kräften erfolgen kann.

Die Ionenquellen 13 der Ionisationsvorrichtung sind bevorzugt in seitlich angeordneten Aussparungen 8 der Rückwand 9 untergebracht. Diese Aussparungen, welche bei Nichtverwendung mittels eines Clip 14 verschlossen sind, ermöglichen einen Zugang zum Wägeraum von aussen, auch wenn sämtliche Wände 17 der Windschutzvorrichtung 2 geschlossen sind. Die Aussparungen 8 sind von aussen her gut zugänglich, da die Breite des Waagengehäuses 7 geringer ist, als diejenige der Rückwand 9. An der Aussenseite des Waagengehäuses 7 sind Führungsschächte 15 angebracht, in welchen die hier nicht sichtbaren Zuleitungen zur Ionenquelle 13 angeordnet sind und der entsprechenden Elektronik zugeführt werden.

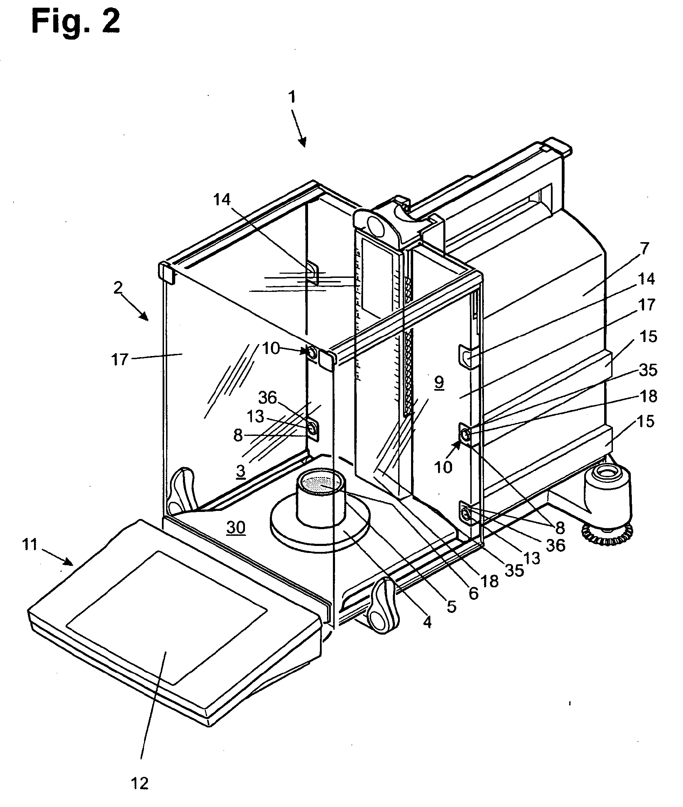

Die Figur 2 zeigt die Waage aus Figur 1 in analoger Darstellung, wobei zwei Sensorelemente 18 mindestens eines Elektrostatiksensors 10 in je einer rechts und links in der Rückwand 9 der Waage 1 vorhandenen Aussparung 8 angeordnet sind. Die Ionenquellen 13 der Ionisationsvorrichtung sind wie jene in der Figur 1 gezeigten in weiteren Aussparungen 8 untergebracht. An der Aussenseite des Waagengehäuses 7 sind Führungsschächte 15 angebracht, in welchen die hier nicht sichtbaren Zuleitungen des Elektrostatiksensors 10 beziehungsweise zur Ionenquelle 13 angeordnet sind und der entsprechenden Elektronik zugeführt werden. Die beiden in den Aussparungen 8 untergebrachten Sensorelemente 18 des mindestens einen Elektrostatiksensors 10 können nun bereits beim Einbringen der Last in den Wägeraum 3 durch eine geöffnete Seitenwand 17 das Vorhandensein elektrostatischer Ladungen auf der Last detektieren, wobei dann unmittelbar die Ionisationsvorrichtung in Gang gesetzt werden kann.

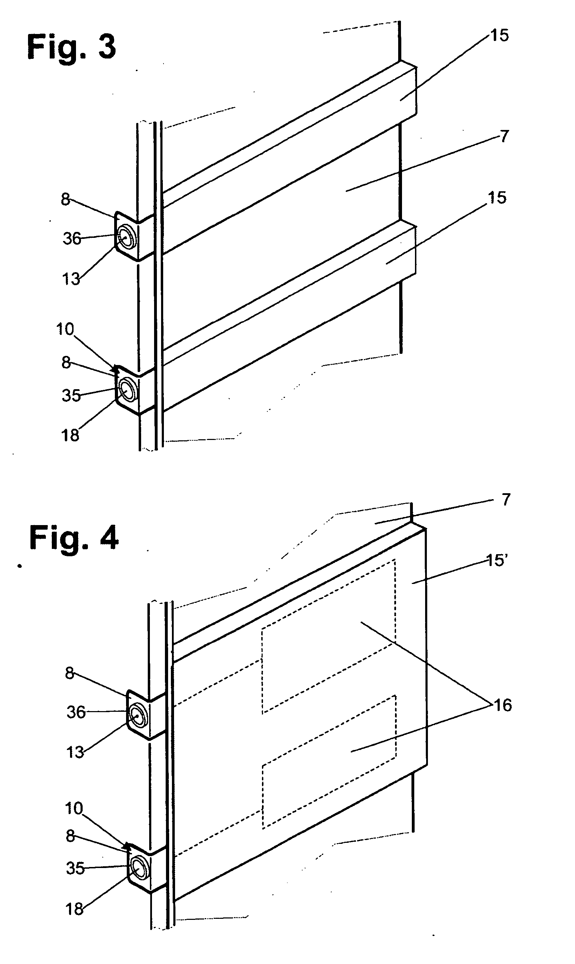

Die Figuren 3 und 4 zeigen jeweils in einer Ausschnittvergrösserung entsprechend der Figur 2 eine Wand des Waagengehäuses 7, an welche verschiedene Ausgestaltungen der Führungsschächte 15, 15' angebracht sind. Während ein Führungsschacht 15 (gemäss Figur 3) lediglich für das Führen der Zuleitungen geeignet ist, können in einem Führungsschacht 15' (gemäss Figur 4) auch elektronische Bauelemente 16 untergebracht werden, beispielsweise solche zur Steuerung der Ionenquelle 13 als Teil der lonisationsvorrichtung und/oder die Messelektronik des Elektrostatiksensors 10. Es sei angemerkt, dass die Ionenquelle 13 und das Sensorelement 18 in der Darstellung gemäss den Figuren 3 und 4 gegenüber jener der Figur 2 vertauscht sind. Dies zeigt auf, dass für die jeweilige Anordnung der Ionenquelle 13 beziehungsweise des Sensorelements 18 verschiedene Positionen innerhalb des Wägeraums 3 möglich sind. Zum Beispiel ist es bevorzugt, wenn ein Sensorelement 18 in unmittelbarer Nähe der Waagschale 4, jedoch ohne mechanischen Kontakt zu dieser, positioniert ist. Es können ein, zwei oder auch mehrere Sensorelemente 18 und/oder Elektrostatiksensoren 10 vorhanden sein. Eine Ionenquelle 13 der Ionisationsvorrichtung ist bevorzugt nahe der zum Öffnen und Schliessen des Wägeraums 3 verschiebbaren Seitenwand 17angebracht. Auch hier können mehr als eine, bevorzugt zwei, Ionenquellen 13 vorhanden sein.

Da wie aus den Figuren 1 bis 4 ersichtlich, sich die Ionenquellen 13 bevorzugt nahe der jeweiligen Seitenwand 17 der Windschutzvorrichtung 2 befinden, ist es vorteilhaft, wenn diese aktiviert werden, sobald eine solche Wand 17 geöffnet wird, so dass bereits beim Einbringen in den Wägeraum 3 das Behältnis 5 sowie das Wägegut 6 von elektrostatischen Ladungen befreit werden.

Die Figur 5 zeigt das Schaltschema eines Elektrostatiksensors 10. Dieser basiert auf dem Prinzip der Detektion von Influenzladungen und weist eine flächige Sensorelektrode als Sensorelement 18 auf. Das Messsignal wird mittels einer Integrationsstufe 19, einer Betragswandlerstufe 20 und einer Komparatorstufe 21 zur Anzeige gebracht. Über die Integrationsstufe 19 ist ein Schaltelement 22 platziert, mittels welchem nach erfolgter Messung bzw. einer erfolgten Aktion seitens der Wägeelektronik, manuell oder automatisch das Messsignal zurückgesetzt wird. In der Komparatorstufe 21 wird der integrierte Absolutwert des Messsignals mit mindestens einem Schwellwert verglichen. Anschliessend kann entweder auf dem Bildschirm 12 der Anzeige- und Bedieneinheit 11 oder mittels einer Leuchtdiode einem Benutzer der Waage angezeigt werden, dass die Last, beispielsweise das Behältnis 5 und/oder das Wägegut 6 eine elektrostatische Aufladung oberhalb eines vorgegebenen Schwellwerts aufweist. Ausserdem kann eine Aktion, welche in bevorzugter Weise durch die Wägeelektronik gesteuert wird, ausgelöst werden. Eine solche Aktion ist beispielsweise die Aktivierung einer Ionisationsvorrichtung, welche über einen vordefinierten Zeitraum elektrische Ladungen zum Neutralisieren der elektrostatischen Aufladung in den Wägeraum 3 einbringt.

Es versteht sich von selbst, dass die Komparatorstufe 21 nicht nur eine einzige Vergleichseinheit aufweisen muss. Vielmehr steht die in der Figur 4 schematisch dargestellte Komparatorstufe 21 stellvertretend für eine solche mit einer oder mit mehreren Vergleicheinheiten mit verschiedenen vorgegebenen Schwellwerten, beispielsweise drei Schwellwerten, so dass eine semiquantitative Erfassung der elektrostatischen Aufladung erfolgen kann. Entsprechend einem Überschreiten eines der drei Schwellwerte wird die Stärke und/oder die Zeitdauer des Ausstosses der Ionisationsvorrichtung angepasst. Bei Feststellung des Vorzeichens der elektrostatischen Aufladungen kann auch das Vorzeichen der von der Ionisationsvorrichtung zu erzeugenden Ionen vorgegeben werden.

Weitere Aktionen der Waage 1 können alternativ oder zusätzlich zur Aktivierung der Ionisationsvorrichtung ausgeführt werden. Beispielsweise kann bei einer oberhalb eines der höheren Schwellwerte festgestellten elektrostatischen Aufladung ein Warnsignal ausgegeben werden und/oder jede weitere Wägung blockiert werden.

Selbstverständlich können auch andere Prinzipien der Detektion von elektrostatischen Aufladungen eingesetzt werden. Insbesondere sei in diesem Zusammenhang auf das Prinzip der Feldmühle verwiesen.

In der Figur 6 ist stark schematisiert das Blockschaltbild einer Waage 101 mit einem Elektrostatiksensor 10, wie er beispielsweise in der Figur 5 dargestellt ist, und mit einer Ionisationsvorrichtung 23 gezeigt. Die Waage 101, welche hier keine Windschutzvorrichtung aufweist, ist mit einer Waagschale 104 versehen, auf welcher die Last, hier als beliebiges Wägeobjekt 25 ohne Behältnis dargestellt, aufgebracht ist. Ferner weist die Waage 101 eine Wägezelle 26 und eine Wägeelektronik 27 auf. Der Elektrostatiksensor 10 weist eine Sensorelektrode als Sensorelement 18 und eine Sensorelektronik 24 auf, welche die in der Figur 5 beschriebene Integrationsstufe 19, Betragswandlerstufe 20 und Komparatorstufe 21 umfasst, jedoch auch in einer anderen, prinzipiell bekannten Ausformung ausgestaltet sein kann. Sowohl die Sensorelektronik 24 als auch die Ionisationsvorrichtung 23 sind mit der Wägeelektronik 27 der Waage 101 verbunden. Dadurch kann einer Messeinheit 28 der Wägeelektronik 27 die Information über die Höhe der elektrostatischen Aufladung übermittelt werden. In der Messeinheit 28 werden diese Daten in einer Speichereinheit 29 abgelegt. In einer Prozessoreinheit 37 der Messeinheit 28 wird ein Programm ausgeführt, welches bei Überschreiten von Schwellwerten die Ionisationsvorrichtung 23 aktiviert. Daher befindet sich auch die Ionisationsvorrichtung 23 in Verbindung mit der Wägelektronik 27. Die Schwellwerte können über eine Eingabevorrichtung 31 beispielsweise der Anzeige- und Bedieneinheit 11 modifiziert werden. Eine das Mass der elektrostatischen Aufladung kennzeichnende Ausgabe kann entweder am Bildschirm 12 der Anzeige- und Bedieneinheit 11 erfolgen oder vermittels optischer Anzeigen, z.B. der Leuchtdioden 32, 33, 34, die mit unterschiedlichen Farben das Überschreiten eines vorgegebenen Schwellwerts signalisieren.

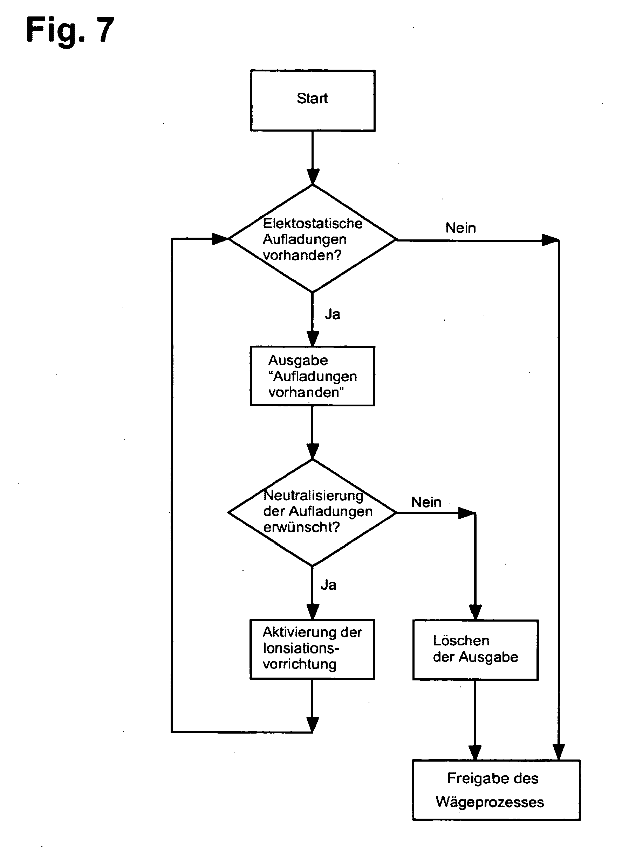

Die Figur 7 zeigt in einem Flussdiagramm ein Verfahren zum Betrieb der Waage 1, 101 im Hinblick auf die Detektion und die Beseitigung von elektrostatischen Aufladungen in der Umgebung der Waagschale 4, 104 und/oder der Last. Mittels des Elektrostatiksensors 10 wird das Vorhandensein der Aufladung festgestellt und mittels einer Komparatorstufe, die prinzipiell als Komparatoreinheit auch Bestandteil der Messeinheit sein kann, wird die Höhe und/oder das Vorzeichen der Aufladung bestimmt. Das Ergebnis wird angezeigt und es wird abgeklärt, ob eine Aktion der Waage 1, 101, d.h. eine Aktivierung der Ionisationsvorrichtung 23 notwendig ist, insbesondere in welcher Stärke und gegebenenfalls auch mit welchem Vorzeichen die Ionisation der die Waagschale 4, 104 und/oder die Last umgebenden Luft erfolgen soll. Falls die Notwendigkeit eines Neutralisation der elektrostatischen Aufladung besteht, wird die Ionisationsvorrichtung 23 aktiviert. Im Falle, dass keine solche Notwendigkeit besteht, wird die entsprechende Anzeige gelöscht und der Wägeprozess kann in Gang gesetzt werden. Nach erfolgter Ionisation, die in ihrem Ausmass und in ihrer Dauer dem entsprechend festgestellten Mass der elektrostatischen Aufladung angepasst ist, wird der Wägeprozess ebenfalls in Gang gesetzt und die Anzeige wird gelöscht.

Ist nach einer erfolgten Ionisation das Mass, der Aufladung noch oberhalb eines Schwellwerts festzustellen, wird entsprechend der neuerlichen Bestimmung der Aufladungen die Dauer und/oder die Intensität der Ionisation an diesen neuen Wert beziehungsweise Messwert angepasst und die Folge von Ermitteln des Masses der Aufladung und nachfolgender Ionisation wird solange wiederholt, bis dieser Wert beziehungsweise Messwert unter einen vordefinierten Schwellwert abgesunken ist.

Die Erfindung wurde anhand der in den Figuren dargestellten Ausführungsbeispiele gezeigt und beschrieben. Es versteht sich von selbst, dass weitere hier nicht beschriebene Ausführungsformen des Verfahrens und der Vorrichtung dem Wesen der Erfindung gerecht werden. Insbesondere kann in der Wägeelektronik das Auslösen einer Aktion, vor allem einer Aktivierung der Ionisationsvorrichtung nachdem das Vorhandensein elektrostatischer Aufladungen festgestellt wurde, mittels einer Analogschaltung realisiert werden.

### Bezugszeichenliste

- 1, 101: Waage
- 2: Windschutzvorrichtung
- 3: Wägeraum
- 4, 104: Waagschale
- 5: Behältnis
- 6: Wägegut
- 7: Gehäuse, Waagengehäuse
- 8: Aussparung
- 9: Rückwand
- 10: Elektrostatiksensor
- 11: Anzeige- und Bedieneinheit
- 12: Bildschirm
- 13: Ionenquelle
- 14: Clip
- 15, 15': Führungsschacht
- 16: elektronische Bauelemente
- 17: Seitenwand
- 18: Sensorelement
- 19: Integrationsstufe
- 20: Betragswandlerstufe
- 21: Komparatorstufe
- 22: Schaltelement
- 23: Ionisationsvorrichtung
- 24: Sensorelektronik
- 25: Wägeobjekt
- 26: Wägezelle
- 27: Wägeelektronik
- 28: Messeinheit
- 29: Speichereinheit
- 30: Wägeraumboden
- 31: Eingabevorrichtung
- 32: Leuchtdiode
- 33: Leuchtdiode
- 34: Leuchtdiode
- 35: Einfassung des Sensorelements
- 36: Einfassung der Ionenquelle
- 37: Prozessoreinheit

## Patentansprüche

1. Verfahren zum Betrieb einer Waage (1,101) mit einer Waagschale (4,104) zur Aufnahme einer zu wiegenden Last (5, 6, 25) und mit einer Wägeelektronik (27), die eine Messeinheit (28) aufweist, **dadurch gekennzeichnet, dass** ein Elektrostatiksensor (10) vorgesehen ist, welcher derart angeordnet ist, dass elektrostatische Aufladungen an einer auf der Waagschale (4, 104) aufgebrachten oder aufzubringenden Last (5, 6, 25) detektierbar sind, wobei
• vermittels des Elektrostatiksensors(10) das Vorhandensein elektrostatischer Ladungen ermittelt wird,
• die Information bezüglich des das Mass der Aufladungen kennzeichnenden Werts der Messeinheit (28) zugeleitet wird,
• wobei das Mass der ermittelten Aufladungen mit mindestens einem vordefinierbaren Schwellwert verglichen wird und
• eine Aktion der Wägeelektronik (27) ausgelöst wird.

2. Verfahren nach Anspruch 1, **dadurch gekennzeichnet, dass** die Messeinheit (28) eine Prozessoreinheit (37) und eine Speichereinheit (29) aufweist, in welcher Prozessoreinheit (37) ein Programm ausgeführt wird, welches das Mass der ermittelten Aufladungen mit mindestens einem in der Speichereinheit (29) veränderbar vordefinierten Schwellwert vergleicht

3. Verfahren nach Anspruch 1 oder 2, **dadurch gekennzeichnet, dass** die Messeinheit (28) eine Speichereinheit (29) aufweist und der ermittelte Wert zur weiteren Verarbeitung in der Speichereinheit (29) abgelegt wird.

4. Verfahren nach Anspruch 2 oder 3, **dadurch gekennzeichnet, dass** vermittels des Elektrostatiksensors (10) bei Vorhandensein elektrostatischer Aufladungen deren Höhe und/oder deren Vorzeichen gemessen wird, die Information bezüglich des die Höhe und/oder das Vorzeichen der Aufladungen kennzeichnenden Messwerts der Messeinheit (28) zugeleitet wird, das Programm den Messwert mit mindestens einem in der Speichereinheit (29) veränderbar vordefinierten Schwellwert vergleicht, bei Überschreiten mindestens eines Schwellwerts eine Aktion der Wägeelektronik (27) auslöst und den Messwert zur weiteren Verarbeitung in der Speichereinheit (29) ablegt.

5. Verfahren nach einem der Ansprüche 2 bis 4, **dadurch gekennzeichnet, dass** in der Wägeelektronik (27) ein Zeitgeber vorhanden ist, wobei die Prozessoreinheit (37) auf diesen zugreifen kann und das Programm jedem das Mass, insbesondere die Höhe und/oder das Vorzeichen, der Aufladung kennzeichnenden Wert, insbesondere dem Messwert, einen Zeitwert zuordnet und das Wertepaar in der Speichereinheit (29) ablegt.

6. Verfahren nach einem der Ansprüche 1 bis 5, **dadurch gekennzeichnet, dass** die Waage (1,101) eine Ausgabeeinheit, insbesondere einen Bildschirm (12) einer Anzeige- und Bedieneinheit (11) und/oder mindestens eine Leuchtdiode (32, 33, 34) und/oder einen Drucker aufweist, wobei ein vom das Mass, insbesondere die Höhe und/oder das Vorzeichen, der Aufladung kennzeichnenden Wert oder Messwert, abhängiges Signal an der Ausgabeeinheit ausgegeben wird.

7. Verfahren nach einem der Ansprüche 1 bis 6, **dadurch gekennzeichnet, dass** die Waage (1,101) eine Ausgabeeinheit, insbesondere einen Bildschirm (12) einer Anzeige- und Bedieneinheit (11) und/oder mindestens eine Leuchtdiode (32, 33, 34) und/oder einen Drucker aufweist, wobei vermittels der Ausgabeeinheit eine Warnung angezeigt wird, die einen Benutzer der Waage (1,101) über das Vorhandensein elektrostatischer Aufladungen informiert und ihn auffordert eine Aktion der Wägeelektronik (27) auszulösen.

8. Verfahren nach einem der Ansprüche 2 bis 6, **dadurch gekennzeichnet, dass** vermittels des Programms aufgrund des das Mass, insbesondere die Höhe und/oder das Vorzeichen, der Aufladung kennzeichnenden Werts beziehungsweise Messwerts die Aktion der Wägeelektronik (27) gesteuert wird.

9. Verfahren nach einem der Ansprüche 1 bis 8, **dadurch gekennzeichnet, dass** die Waage (1, 101) eine lonisationsvorrichtung (23) aufweist, welche bei Überschreiten eines vordefinierbaren Schwellwerts durch den das Mass, insbesondere die Höhe und/oder das Vorzeichen, der Aufladung kennzeichnenden Wert, insbesondere den Messwert, die lonisationsvorrichtung (23) in Gang gesetzt wird.

10. Verfahren nach Anspruch 9, **dadurch gekennzeichnet, dass** die Aktivität der Ionisationsvorrichtung (23), insbesondere die Dauer und/oder die Intensität der Ionisation entsprechend dem Mass, insbesondere der Höhe und/oder des Vorzeichens, des die Aufladung kennzeichnenden Werts, insbesondere des Messwerts, erfolgt.

11. Verfahren nach Anspruch 9 oder 10, **dadurch gekennzeichnet, dass** nach erfolgter Ionisation das Mass, insbesondere die Höhe und/oder das Vorzeichen der Aufladung erneut ermittelt wird und der Wert, insbesondere der Messwert der Messeinheit (28) zugeführt wird, wonach die Dauer und/oder die Intensität der Ionisation an den neuen Wert, beziehungsweise Messwert angepasst wird und die Folge von Ermitteln des Masses der Aufladung und nachfolgender Ionisation solange wiederholt wird, bis der Wert, insbesondere der Messwert unter einen vordefinierten Schwellwert abgesunken ist.

12. Verfahren nach einem der Ansprüche 9 bis 11, **dadurch gekennzeichnet, dass** ein Feuchtigkeitssensor zur Bestimmung der Luftfeuchtigkeit vorhanden ist und dass die Information bezüglich des das Mass der Luftfeuchtigkeit kennzeichnenden Werts der Messeinheit (28) zugeleitet wird, und dass das Programm die Aktivität der Ionisationsvorrichtung (23) entsprechend dem Mass der Luftfeuchtigkeit modifiziert.

13. Verfahren nach einem der Ansprüche 1 bis 12, **dadurch gekennzeichnet, dass** die Waage (1, 101) einen die Waagschale (4, 104) umgebenden Wägeraum (3), der von einer Windschutzvorrichtung (2) umschfossen ist, aufweist, wobei die Windschutzvorrichtung (2) mindestens eine durch eine Wand (17) verschliessbare Öffnung für den Zugang zum Wägeraum (3) aufweist, und dass der Elektrostatiksensor (10) bei Betätigen der Wand (17) elektrostatische Aufladungen der Last (5, 6, 25) beim Einbringen in den Wägeraum (3) ermittelt.

14. Verfahren nach einem der Ansprüche 9 bis 13, **dadurch gekennzeichnet, dass** ein Codeleser vorhanden ist und dass das das Wägegut (6) beinhaltende Gefäss (5) einen Code aufweist, welcher über das Material des Gefässes (5) Auskunft gibt und dass im Programm ein Programmteil ausgeführt wird, welcher die Aktivität der Ionisationsvorrichtung (23) entsprechend dem Gefässmaterial modifiziert.

15. Waage (1, 101) zur Durchführung des Verfahrens gemäss einem der Ansprüche 1 bis 14 mit einer Waagschale (4, 104), mit einer Wägeelektronik (27), die eine Messeinheit (28) aufweist, **dadurch gekennzeichnet, dass** mindestens ein Elektrostatiksensor (10), welcher derart angeordnet ist, dass elektrostatische Aufladungen einer auf der Waagschale (4, 104) aufgebrachten oder aufzubringenden Last (5, 6, 25) ermittelbar sind, vorhanden ist, welcher Elektrostatiksensor (10) mit der Messeinheit (28) in Verbindung steht, wobei bei festgestellter, über mindestens einen vordefinierbaren Schwellwert hinausreichender Aufladung eine Aktion der Wägeelektronik (27) auslösbar ist.

16. Waage (1, 101) nach Anspruch 15, **dadurch gekennzeichnet, dass** die Messeinheit (28) eine Prozessoreinheit (37) sowie eine Speichereinheit (29) aufweist, wobei in der Prozessoreinheit (37) ein Programm ausführbar ist, das bei festgestellter, über mindestens einen vordefinierbaren Schwellwert hinausreichender Aufladung eine Aktion der Wägeelektronik (27) auslöst und/oder den gemessenen Wert zur weiteren Verarbeitung in der Speichereinheit (29) ablegt.

17. Waage (1,101) nach Anspruch 15 oder 16, **dadurch gekennzeichnet, dass** eine Ionisationsvorrichtung (23) vorhanden ist, die entsprechend der ermittelten Aufladungen der Last (5, 6, 25) aktivierbar und/oder die von der Messeinheit (28) entsprechend der ermittelten Aufladungen der Last (5, 6, 25) steuerbar ist.

18. Waage (1,101) nach Anspruch 15, 16 oder 17, **dadurch gekennzeichnet, dass** diese einen die Waagschale (4, 104) umgebenden Wägeraum (3), der von einer Windschutzvorrichtung (2) umschlossen ist, aufweist, wobei die Windschutzvorrichtung (2) mindestens eine durch eine Wand (17) verschliessbare Öffnung für den Zugang zum Wägeraum (3) aufweist, wobei mindestens ein Sensorelement (18) des mindestens einen Elektrostatiksensors (10) in unmittelbarer Nähe der mindestens einen verschliessbaren Öffnung der Windschutzvorrichtung (2) angeordnet ist.

19. Waage (1,101) nach einem der Ansprüche 15 bis 18, **dadurch gekennzeichnet, dass** diese einen die Waagschale (4, 104) umgebenden Wägeraum (3), der von einer Windschutzvorrichtung (2) umschlossen ist, aufweist, wobei die Windschutzvorrichtung (2) mindestens eine durch eine Wand (17) verschliessbare Öffnung für den Zugang zum Wägeraum (3) aufweist, und dass eine lonisationsvorrichtung (23) vorhanden ist, die mindestens eine lonenquelle (13) aufweist, wobei die mindestens eine lonenquelle (13) der Ionisationsvorrichtung (23) in unmittelbarer Nähe der mindestens einen verschliessbaren Öffnung der Windschutzvorrichtung (2) angeordnet ist.

20. Waage (1,101) nach Anspruch 18 oder 19, **dadurch gekennzeichnet, dass** die Windschutzvorrichtung (2) mindestens eine feststehende Wand (9) aufweist, welche mit Aussparungen (8) versehen ist, in welchen die mindestens eine Ionenquelle (13) der lonisationsvorrichtung (23) und/oder mindestens ein Sensorelement (18) des mindestens einen Elektrostatiksensors (10) angeordnet ist.

21. Waage (1, 101) nach Anspruch 20, **dadurch gekennzeichnet, dass** diese ein der Unterbringung einer Wägezelle (26) und der Wägeelektronik (27) dienendes Waagengehäuse (7) aufweist, dessen eine Wand die feststehende Wand (9) der Windschutzvorrichtung (2) bildet, wobei am Waagengehäuse (7) in die Aussparungen (8) mündende Führungsschächte (15) angeordnet sind, in welchen Zuleitungen zum Sensorelement (18) des Elektrostatiksensors (10) und/oder Zuleitungen zur Ionenquelle (13) der Ionisationsvorrichtung (23) angeordnet sind.

22. Waage (1, 101) nach Anspruch 20, **dadurch gekennzeichnet, dass** diese ein der Unterbringung einer Wägezelle (26) und der Wägeelektronik (27) dienendes Waagengehäuse (7) aufweist, dessen eine Wand die feststehende Wand (9) der Windschutzvorrichtung (2) bildet, wobei am Waagengehäuse (7) in die Aussparungen (8) mündende Führungsschächte (15') angeordnet sind, in welchen elektronische Bauelemente (16) des Elektrostatiksensors (10) und/oder der Ionisationsvorrichtung (23) untergebracht sind.

23. Waage (1, 101) nach einem der Ansprüche 15 bis 22, **dadurch gekennzeichnet, dass** ein Ausgabegerät, insbesondere mindestens eine Leuchtdiode (32, 33, 34) und /oder eine Anzeigeeinheit (12) und/oder ein Drucker vorhanden ist zur semiquantitativen Anzeige eines das Mass der elektrostatischen Aufladung kennzeichnenden Werts und/oder zur Ausgabe eines die Höhe und/oder das Vorzeichen der Aufladung kennzeichnenden Messwerts.

## Claims

1. Method of operating a balance (1, 101) with a weighing pan (4, 104) serving to receive a load (5, 6, 25) to be weighed and with an electronic weighing module (27) including a measuring unit (28), **characterized in that** an electrostatic sensor (10) is foreseen being arranged so that accumulations of electrostatic charges can be detected which reside on a load (5, 6, 25) that is placed or about to be placed on the weighing pan (4, 104), said method comprising the steps of:
• detecting the presence of electrostatic charges by means of the electrostatic sensor (10),
• transferring the information concerning the value characterizing the magnitude of the charges to the measuring unit (28),
• wherein the magnitude of the detected charges is compared against at least one threshold value that can have been defined beforehand, and
• triggering an action of the electronic weighing module (27).

2. Method according to claim 1, **characterized in that** the measuring unit (28) includes a processor unit (37) and a memory unit (29), wherein a program is executed in the processor unit (37) which compares the magnitude of the detected charge accumulations against at least one threshold value which is predefined with a variable amount in the memory unit (29).

3. Method according to claim 1 or 2, **characterized in that** the measuring unit (28) includes a memory unit (29) and that the value that has been determined is stored in the memory unit (29) for further processing.

4. Method according to claim 2 or 3, **characterized in that** if electrostatic charge accumulations are present, their amount and/or polarity is measured by means of the electrostatic sensor (10), the information concerning the measurement value characterizing the amount and/or polarity of the charge accumulations is directed to the measuring unit (28); the program compares the measurement value against at least one threshold value which is predefined with a variable amount in the memory unit (29), triggers an action of the electronic weighing module (27) if at least one threshold value is exceeded, and stores the measurement value in the memory unit (29) for further processing.

5. Method according to one of the claims 2 to 4, **characterized in that** a reference clock is provided in the electronic weighing module (27), wherein the processor unit (37) can access the reference clock and the program assigns a time value to each value, in particular to the measurement value, characterizing the amount and/or polarity of the charge accumulation, and stores the value pair in the memory unit (29).

6. Method according to one of the claims 1 to 5, **characterized in that** the balance (1, 101) includes an output unit, in particular a display screen (12) of an indicating and operating unit (11) and/or at least one light-emitting diode (32, 33, 34) and/or a printer, wherein a signal is delivered at the output unit which is dependent on the value or measurement value that characterizes the magnitude, in particular the amount and/or the polarity, of the charge accumulation.

7. Method according to one of the claims 1 to 6, **characterized in that** the balance (1, 101) includes an output unit, in particular a display screen (12) of an indicating and operating unit (11) and/or at least one light-emitting diode (32, 33, 34) and/or a printer, wherein by means of the output unit a warning is given out to alert a user of the balance (1, 101) about the presence of electrostatic charge accumulations and to prompt the user to trigger an action of the electronic weighing module (27).

8. Method according to one of the claims 2 to 6, **characterized in that** the action of the electronic weighing module (27) is controlled by means of the program based on the value that characterizes the magnitude, in particular the amount and/or the polarity, of the charge accumulation, or based on the measurement value.

9. Method according to one of the claims 1 to 8, **characterized in that** the balance (1, 101) comprises an ionizing device (23) which is activated when the value that characterizes the magnitude, in particular the amount and/or the polarity, of the charge accumulation, in particular the measurement value, exceeds a threshold value which can be predefined.

10. Method according to claim 9, **characterized in that** the activity of the ionization device (23), in particular the duration and/or the intensity of the ionization, takes place in accordance with the value that characterizes the magnitude, in particular the amount and/or the polarity, of the charge accumulation, in particular the measurement value.

11. Method according to claim 9 or 10, **characterized in that** after the ionization has occurred, the magnitude, in particular the height and/or polarity of the charge accumulation, is redetermined and the value, in particular the measurement value, is directed to the measuring unit 28), whereupon the duration and/or intensity of the ionization is adapted to the new value or measurement value and the cycle of steps of determining the magnitude of the charge accumulation and subsequently performing an ionization is repeated until the value, in particular the measurement value, has fallen below a predefined threshold value.

12. Method according to one of the claims 9 to 11, **characterized in that** a humidity sensor is provided for the determination of the atmospheric humidity, and that the information concerning the value that characterizes the magnitude of the atmospheric humidity is directed to the measuring unit (28), and that the program modifies the activity of the ionization device (23) in accordance with the magnitude of the atmospheric humidity.

13. Method according to one of the claims 1 to 12, **characterized in that** the balance (1, 101) has a weighing compartment (3) surrounding the weighing pan (4, 104) which is enclosed by a draft protection device (2), wherein the draft protection device (2) has at least one access opening to the weighing compartment (3) which can be closed by a wall panel (17), and that when the wall panel (17) is moved the electrostatic sensor (10) determines electrostatic charge accumulations of the load (5, 6, 25) at the time when the latter is brought into the weighing compartment (3).

14. Method according to one of the claims 9 to 13, **characterized in that** a code reader is provided and that the container (5) which holds the weighing substance (6) has a code which provides information concerning the material of the container (5), and that a program routine is executed in the program which modifies the activity of the ionization device (23) in accordance with the container material.

15. Balance (1, 101), operable to perform the method according to one of the claims 1 to 14, with a weighing pan (4, 104), with an electronic weighing module (27) that includes a measuring unit (28), **characterized in that** at least one electrostatic sensor (10) is provided which is arranged so that electrostatic charge accumulations of a load (5, 6, 25) can be detected which is placed or about to be placed on the weighing pan (4, 104), wherein said electrostatic sensor (10) is connected to the measuring unit (28), and wherein an action of the electronic weighing module (27) can be triggered when a charge accumulation has been detected in excess of at least one threshold value which can have been predefined.

16. Balance (1, 101) according to claim 15, **characterized in that** the measuring unit (28) includes a processor unit (37) as well as a memory unit (29), wherein the processor unit (37) is operable to execute a program which triggers an action of the electronic weighing module (27) when a charge accumulation has been detected that exceeds at least one threshold value which can have been predefined, and/or which stores the measured value in the memory unit (29) for further processing.

17. Balance (1, 101) according to claim 15 or 16, **characterized in that** an ionization device (23) is provided which can be activated in accordance with the detected charge accumulations of the load (5, 6, 25) and/or which can be controlled by the measuring unit (28) in accordance with the detected charge accumulations of the load (5, 6, 25).

18. Balance (1, 101) according to claim 15, 16 or 17, **characterized in that** the balance comprises a weighing compartment (3) surrounding the weighing pan (4, 104), which is enclosed by a draft protection device (2), wherein the draft protection device (2) has at least one access opening to the weighing compartment (3) which can be closed by a wall panel (17), wherein at least one sensor element (18) of the at least one electrostatic sensor (10) is arranged in immediate proximity to the at least one closeable access opening of the draft protection device (2).

19. Balance (1, 101) according to one of the claims 15 to 18, **characterized in that** the balance comprises a weighing compartment (3) surrounding the weighing pan (4, 104), which is enclosed by a draft protection device (2), wherein the draft protection device (2) has at least one access opening to the weighing compartment (3) which can be closed by a wall panel (17), and that an ionization device (23) is provided which comprises at least one ion source (13), wherein the at least one ion source (13) of the ionizing device (23) is arranged in immediate proximity to the at least one closable access opening of the draft protection device (2).

20. Balance (1, 101) according to claim 18 or 19, **characterized in that** the draft protection device (2) comprises at least one fixed wall (9) which is provided with recesses (8) in which the at least one ion source (13) of the ionizing device (23) and/or at least one sensor element (18) of the at least one electrostatic sensor (10) are arranged.

21. Balance (1, 101) according to claim 20, **characterized in that** the balance (1, 101) has a balance housing (7) which serves to accommodate a weighing cell (26) and the electronic weighing module (27), wherein one wall of the balance housing (7) forms the fixed wall (9) of the draft protection device (2), wherein conduit channels (15) ending in said recesses (8) are arranged on the balance housing (7), with connecting leads to the sensor element (18) of the electrostatic sensor (10) and/or connecting leads to the ion source (13) of the ionizing device (23) being arranged in the conduit channels.

22. Balance (1, 101) according to claim 20, **characterized in that** the balance (1, 101) has a balance housing (7) which serves to accommodate a weighing cell (26) and the electronic weighing module (27), wherein one wall of the balance housing (7) forms the fixed wall (9) of the draft protection device (2), wherein conduit channels (15') ending in said recesses (8) are arranged on the balance housing (7), with electronic components (16) of the electrostatic sensor (10) and/or of the ionization device (23) being accommodated inside said conduit channels (15').

23. Balance (1, 101) according to one of the claims 15 to 22, **characterized in that** an output instrument, in particular at least one light-emitting diode (32, 33, 34) and/or an indicating unit (12) and/or a printer, is provided for the semi-quantitative indication of a value that characterizes the magnitude of the electrostatic charge and/or to give out a measurement value that characterizes the amount and/or the polarity of the charge accumulation.

## Revendications

1. Procédé pour l'opération d'une balance (1, 101) avec un plateau de balance (4, 104) pour l'accueil d'une charge à peser (5, 6, 25) et avec une électronique de pesage (27) comportant une unité de mesurage (28), **caractérisé en ce qu'**il est prévu un capteur électrostatique (10) disposé de telle manière que la charge électrostatique peut être détectée sur une charge (5, 6, 25) à appliquer ou appliquée sur le plateau de pesage (4, 104) et **en ce que**
- le capteur électrostatique (10) permet de détecter la présence de charges électrostatiques,
- l'information concernant la valeur caractérisant la mesure de charges est transmise à l'unité de mesurage (28),
- la mesure de charges détectées étant comparée avec au moins une valeur seuil prédéterminée, et
- une action de l'électronique de pesage (27) étant déclenchée.

2. Procédé selon la revendication 1, **caractérisé en ce que** l'unité de mesurage (28) comporte une unité de processeur (37) et une unité de mémoire (29), dans laquelle unité de processeur (37) un programme peut être exécuté, qui compare les charges détectées avec au moins une valeur seuil prédéfinie modifiable dans l'unité de mémoire (29).

3. Procédé selon l'une des revendications 1 ou 2, **caractérisé en ce que** l'unité de mesurage (28) comporte une unité de mémoire (29) et la valeur détectée est déposée dans l'unité de mémoire (29) en vue d'un traitement ultérieur.

4. Procédé selon l'une des revendications 2 ou 3, **caractérisé en ce qu'**en présence de charges électrostatiques dont la grandeur et/ou le signe peuvent être mesurés, le capteur électrostatique (10) permet de transmettre à l'unité de mesurage (28) l'information concernant la valeur mesurée caractérisant la grandeur et/ou le signe des charges, **en ce que** le programme compare la valeur mesurée avec au moins une valeur seuil prédéfinie, modifiable dans l'unité de mémoire (29), et **en ce que** lors du dépassement d'au moins une valeur seuil, une action de l'électronique de pesage (27) est déclenchée et la valeur mesurée est déposée pour un traitement ultérieur dans l'unité de mémoire (29).

5. Procédé selon l'une des revendications 2 à 4, **caractérisé en ce qu'**un indicateur de temps est prévu dans l'électronique de pesage (27), l'unité de processeur (37) pouvant avoir accès à celui-ci et le programme attribuant une valeur temporelle à chaque valeur caractérisant la charge, notamment la grandeur et/ou le signe, plus particulièrement à chaque valeur mesurée, et déposant la paire de valeurs dans l'unité de mémoire (29).

6. Procédé selon l'une des revendications 1 à 5, **caractérisé en ce que** la balance (1, 101) comporte une unité d'affichage, plus particulièrement un écran (12) d'une unité de commande et d'affichage (11) et/ou au moins une diode électroluminescente (32, 33, 34) et/ou une imprimante, dans lequel un signal dépendant de la mesure, notamment de la grandeur et/ou du signe, de la valeur caractérisant la charge ou valeur mesurée est transmis à l'unité d'affichage.

7. Procédé selon l'une des revendications 1 à 6, **caractérisé en ce que** la balance (1, 101) comporte une unité d'affichage, plus particulièrement un écran (12) d'une unité de commande et d'affichage (11) et/ou au moins une diode électroluminescente (32, 33, 34) et/ou une imprimante, dans lequel l'unité d'affichage permet d'indiquer une alerte informant l'utilisateur de la balance (1, 101) de la présence de charges électrostatiques et lui demandant de déclencher une action de l'électronique de pesage (27).

8. Procédé selon l'une des revendications 2 à 6, **caractérisé en ce que** le programme permet de commander l'action de l'électronique de pesage (27), à partir de la valeur ou valeur mesurée caractérisant la mesure, notamment la grandeur et/ou le signe de la charge.

9. Procédé selon l'une des revendications 1 à 8, **caractérisé en ce que** la balance (1, 101) comporte un dispositif de ionisation (23), lequel dispositif de ionisation (23) étant mis en marche lors d'un dépassement d'une valeur seuil prédéfinie par la valeur, plus particulièrement la valeur mesurée, caractérisant la mesure, notamment la grandeur et/ou le signe de la charge.

10. Procédé selon la revendication 9, **caractérisé en ce que** l'activité du dispositif de ionisation (23), plus particulièrement la durée et/ou l'intensité de la ionisation est exécutée en fonction de valeur caractérisant la mesure, notamment de la grandeur et/ou du signe de la charge.

11. Procédé selon l'une des revendications 9 ou 10, **caractérisé en ce que** suite à l'ionisation, la mesure, notamment la grandeur et/ou le signe de la charge est détecté(e) à nouveau, et la valeur, plus particulièrement la valeur mesurée, est transmise à l'unité de mesurage (28), la durée et/ou l'intensité de la ionisation étant ensuite adaptée à la nouvelle valeur ou valeur mesurée, après quoi les étapes consécutives de détection de la mesure de charge et d'ionisation consécutive sont répétées, tant que la valeur, en particulier la valeur mesurée, se trouve en-dessous d'une certaine valeur seuil prédéfinie.

12. Procédé selon l'une des revendications 9 à 11, **caractérisé en ce qu'**un détecteur d'humidité est prévu pour la détermination de l'humidité de l'air, et **en ce que** les informations concernant la valeur caractérisant la mesure d'humidité de l'air est transmise à l'unité de mesurage (28), et **en ce que** le programme modifie l'activité du dispositif d'ionisation (23) en fonction de la mesure d'humidité de l'air.

13. Procédé selon l'une des revendications 1 à 12, **caractérisé en ce que** la balance (1, 101) comporte un espace de pesage (3) entourant le plateau de pesage (4, 104) et étant encerclé par un dispositif pare-brise (2), le dispositif pare-brise (2) comportant au moins une ouverture susceptible d'être fermée par une cloison (17), pour l'accès à l'espace de pesage (3), et **en ce que** le capteur électrostatique (10) détecte les charges électrostatiques de la charge (5, 6, 25) lors de l'introduction dans l'espace de pesage (3), lors de l'actionnement de la cloison (17).

14. Procédé selon l'une des revendications 9 à 13, **caractérisé en ce qu'**il est prévu un lecteur de code, et **en ce que** le récipient (5) contenant le produit à peser (6) comporte un code fournissant des indications sur le matériau du récipient (5), et **en ce que** dans le programme est exécutée une partie de programme modifiant l'activité du dispositif d'ionisation (23) en fonction du matériau de récipient.

15. Balance (1, 101) pour l'exécution du procédé selon l'une des revendications 1 à 14, avec un plateau de balance (4, 104), avec une électronique de pesage (27) comportant une unité de mesurage (28), **caractérisée en ce qu'**il est prévu au moins un capteur électrostatique (10), disposé de telle manière que des charges électrostatiques d'une charge (5, 6, 25) à appliquer ou appliquée sur le plateau de balance (4, 104) peuvent être détectées, lequel capteur électrostatique (10) étant relié à l'unité de mesurage (28), une action de l'électronique de pesage (27) pouvant être déclenchée lors d'une charge constatée dépassant au moins une valeur seuil prédéfinie.

16. Balance (1, 101) selon la revendication 15, **caractérisée en ce que** l'unité de mesurage (28) comporte une unité de processeur (37) ainsi qu'une unité de mémoire (29), un programme pouvant être exécuté dans l'unité de processeur (37), permettant de déclencher une action de l'électronique de pesage (27) lors d'une charge constatée dépassant au moins une valeur seuil prédéterminée, et/ou de déposer la valeur mesurée dans l'unité de mémoire (29) pour un traitement ultérieur.

17. Balance (1, 101) selon l'une des revendications 15 ou 16, **caractérisée en ce qu'**il est prévu un dispositif d'ionisation (23), qui peut être activé en fonction de la charge détectée pour la charge (5, 6, 25), et/ou commandé par l'unité de mesurage (28) en fonction de la charge détectée pour la charge (5, 6, 25).

18. Balance (1, 101) selon l'une des revendications 15, 16 ou 17, **caractérisée en ce que** celle-ci comporte un espace de pesage (3) entourant le plateau de balance (4, 104) et étant encerclé par un dispositif pare-brise (2), le dispositif pare-brise (2) comportant au moins une ouverture susceptible d'être fermée par une cloison (17), pour l'accès à l'espace de pesage (3), au moins un élément de détection (18) de l'au moins un capteur électrostatique (10) étant disposé à proximité immédiate de l'au moins une ouverture susceptible d'être fermée du dispositif pare-brise (2).

19. Balance (1, 101) selon l'une des revendications 15 à 18, **caractérisée en ce que** celle-ci comporte un espace de pesage (3) entourant le plateau de balance (4, 104) et étant encerclé par un dispositif pare-brise (2), le dispositif pare-brise (2) comportant au moins une ouverture (17) susceptible d'être fermée par une cloison (17), pour l'accès à l'espace de pesage (3), et **en ce qu'**il est prévu un dispositif d'ionisation (23) comportant au moins une source d'ions (13), l'au moins une source d'ions (13) du dispositif d'ionisation (23) étant disposée à proximité immédiate de l'au moins une ouverture susceptible d'être fermée du dispositif pare-brise (2).

20. Balance (1, 101) selon l'une des revendications 18 ou 19, **caractérisée en ce que** le dispositif pare-brise (2) comporte au moins une cloison (9) maintenue fixement, qui est pourvue d'évidements (8) dans lesquels est disposée l'au moins une source d'ions (13) du dispositif d'ionisation (23) et/ou au moins un élément de détection (18) de l'au moins un capteur électrostatique (10).

21. Balance (1, 101) selon la revendication 20, **caractérisée en ce que** celle-ci comporte un boîtier de balance (7) servant à accueillir une cellule de pesage (26) et l'électronique de pesage (27), dont l'une des cloisons forme la cloison fixe (9) du dispositif pare-brise (2), des puits de guidage (15) débouchant dans les évidements (8) étant disposés sur le boîtier de balance (7), dans lesquels sont disposées des conduites d'arrivées vers l'élément de détection (18) du capteur électrostatique (10) et/ou des conduites d'arrivée vers la source d'ions (13) du dispositif d' ionisation (23).

22. Balance (1, 101) selon la revendication 20, **caractérisée en ce que** celle-ci comporte un boîtier de balance (7) servant à accueillir une cellule de pesage (26) et l'électronique de pesage (27), dont l'une des cloisons forme la cloison fixe (9) du dispositif pare-brise (2), des puits de guidage (15') débouchant dans les évidements (8) étant disposés sur le boîtier de balance (7), dans lesquels sont logés des éléments de construction électroniques (16) du capteur électrostatique (10) et/ou du dispositif d'ionisation (23).

23. Balance (1, 101) selon l'une des revendications 15 à 22, **caractérisé en ce qu'**il est prévu un appareil d'affichage, plus particulièrement au moins une diode électroluminescente (32, 33, 34) et/ou une unité d'affichage (12) et/ou une imprimante, pour l'affichage semi-quantitatif d'une valeur caractérisant la mesure de la charge électrostatique, et/ou pour l'affichage d'une valeur mesurée caractérisant la grandeur et/ou le signe de la charge.
